# EUROPEAN PATENT SPECIFICATION

(11) **EP 2 420 171 B1**
(45) Date of publication and mention of the grant of the patent: **30.09.2015**
(21) Application number: 11177986.4
(22) Date of filing: 18.08.2011
(51) Int. Cl.: A47L 9/00, A47L 9/28

(54) **Cleaner**
Reiniger
Appareil de nettoyage

(30) Priority: 20.08.2010 KR 20100080736
(43) Date of publication of application: 22.02.2012
(73) Proprietor: LG Electronics, Inc., Seoul, 150-721 (KR)
(72) Inventor: Kim, Younggie, 641-711 Gyeongnam (KR); Kim, Sangyun, 641-711 Gyeongnam (KR)
(74) Representative: Vossius & Partner Patentanwälte Rechtsanwälte mbB

(56) References cited:
- EP-A1- 0 572 930
- WO-A1-02/074150
- WO-A1-2007/117095
- WO-A1-2008/030054

## Description

### BACKGROUND OF THE DISCLOSURE

### Field of the Disclosure

The present invention relates to a cleaner including a case which is able to self-move within a preset reference distance by detecting a position of suction nozzle or a user spaced apart from the case.

### Discussion of the Related Art

A cleaner according to the preamble of claim 1 is already known e.g. from WO-A-02074150.

In general, a cleaner is an electric appliance which sucks cleaning objects such as dust and dirt together with air by using a suction motor mounted in a case thereof to collect them therein.

Such a cleaner may be classified into a canister type having a suction nozzle in communication with a case via a connection pipe to suck the cleaning objects and an upright type having a suction nozzle integrally formed with a case.

The canister type cleaner includes a cleaner case in which a suction motor for generating a suction force is mounted, a suction nozzle for sucking cleaning objects located on a cleaning surface by using the suction force generated from the cleaner case, and the connection pipe for connecting the cleaner case with the suction nozzle.

In other words, once an electric power is applied to the cleaner case, the suction motor is driven and the suction force is generated. The suction force enables the air containing dust and foreign matters located on a surface which will be cleaned to be sucked into the suction nozzle. The air including the dust and foreign matters is drawn into the cleaner case via the connection pipe.

The cleaning objects (dust and foreign matters) drawn into the cleaner case may be separated by a filter while they are moving into the case. After that, the separated cleaning objects are stored in the cleaner case and the stored dust and foreign matters are removed from the case by the user.

In the meanwhile, the conventional cleaner mentioned above may be a type the user drags to use.

That is, the user vacuums dust and foreign matters into the cleaner case, with moving the suction nozzle to stops where cleaning objects are located. As the suction nozzle is moved, the cleaner case is moved toward the user by the connection pipe.

However, such the conventional cleaner might cause a problem of declined convenience to the user that is sensitive to the weight of the cleaner case.

### SUMMARY OF THE DISCLOSURE

Accordingly, the present invention is directed to a cleaner. An object of the present invention is to provide a cleaner including a case which is able to self-move within a preset reference distance or a reference distance range by detecting a position of a user or a suction nozzle distant from the case.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a cleaner includes a case comprising a suction motor provided therein; a suction nozzle provided distant from the case; an image processing device provided in the case to photograph a forward side image of the case and to recognize relative position information between the case and a target set to be traced by the case; a driving unit configured to move the case; and a controller configured to control the driving unit to locate a distance between the case and the target, which is included in the position information provided by the image processing device, within a preset reference distance range.

The image processing device may comprise an image photographing unit configured to photograph the forward side image; an image separating unit configured to separate an image of the target from the photographed forward side image; and a memory configured to store distance data corresponding to a position of the target image located in the forward side image therein, and the controller may determine the distance between the target and the case based on the distance data and the position of the target image.

The target is a user who operates the suction nozzle

The driving unit may include a pair of wheels provided in a lower portion of the case; and a motor connected with the pair of the wheels to rotate the wheels.

The pair of the wheels may be provided in both ends of the case, respectively, and the pair of the motors may be provided to rotate the pair of the wheels, respectively.

The image photographing unit may photograph at least two forward side images at a preset interval. The image separating unit may set one of the two images with bigger position change as the target image by comparing the at least two forward side images with each other and the image separating unit may separate the target image from the latest one of the two photographed forward side images.

The controller may set distance data corresponding to a lowest end of the target image as the distance between the case and the target.

The position information recognized from the forward side image by the image processing device may include an angle of a direction toward the target from the case. The controller may control the driving unit to rotate the case, to locate the angle of the direction toward the target from the case within a preset reference angle range.

The memory may store angle data corresponding to a position of the target image located in the forward side image therein. The controller may recognize the angle data corresponding to the position of the target image as the angle of the direction toward the target from the case.

The target may be the suction nozzle.

The cleaner may further include at least two light emitting units provided in the suction nozzle, with spaced apart a predetermined distance from each other. The image processing device may recognize relative position information of the case and the target by photographing lights emitted from the light emitting units.

The image processing device may include an image photographing unit configured to photograph a forward side image having the lights emitted from the light emitting units therein; and a memory configured to store distance data corresponding to a distance between the lights of the light emitting units, which are photographed in the forward side image, therein. The controller determines the distance by comparing the distance between the lights photographed in the forward side image with the distance data.

The position information recognized from the forward side image by the image processing device may include an angle of a direction toward the target from the case. The controller may rotate the case by controlling the driving unit to locate the angle of the direction toward the target from the case within a preset reference angle range.

The memory may store angle data corresponding to a position of each point located in the forward side image therein. The controller may recognize angle data corresponding to one of the lights emitted from the light emitting unit which are photographed in the forward side image as the angle of the direction toward the target from the case.

The memory stores angle data corresponding to a position of each point located in the forward side image therein. The controller may recognize the angle data corresponding to a center point between the lights of the light emitting units, which are photographed in the forward side image, as the angle of the direction toward the target from the case.

Therefore, the present invention has an effect of providing the cleaner having the case which is able to self-move within the preset reference distance or the reference distance range by determining the position of the user or the suction nozzle spaced a predetermined distance from the case.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

In the drawings:

FIG. 1 is a conceptual diagram illustrating a cleaner according to an embodiment of the present invention;

FIG. 2 is a conceptual diagram illustrating a controller according to the embodiment;

FIG. 3 is conceptual diagram illustrating a forward side image and a target image;

FIG. 4 is an example of reference distance data and reference angle data stored in a memory;

FIG. 5 is a conceptual diagram illustrating a cleaner according to another embodiment of the present invention;

FIG. 6 is a conceptual diagram illustrating a controller according to the embodiment shown in FIG. 5;

FIG. 7 is a conceptual diagram of a forward side image;

FIG. 8 is an example of reference distance data and reference angle data stored in a memory; and

FIG. 9 is a flow chart illustrating a control process of the cleaner according to the present invention.

### DESCRIPTION OF SPECIFIC EMBODIMENTS

As follows, a cleaner according to exemplary embodiments of the present invention will be described in detail in reference to the accompanying drawings.

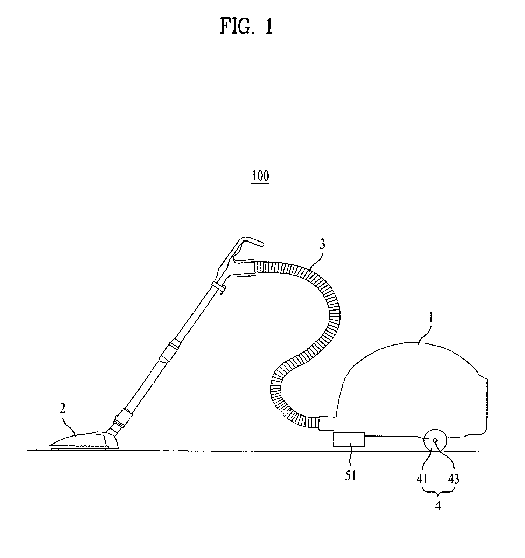

FIG. 1 is a conceptual diagram illustrating a cleaner according to an embodiment of the present invention.

The cleaner 100 according to this embodiment includes a case 1 for generating a suction force and a connection pipe 3 for transporting the suction force generated in the case to a suction nozzle 2.

The suction nozzle 2 sucks cleaning objects such as dust and foreign matters by using the suction force provided via the connection pipe 3 and the sucked cleaning objects are stored in a storage part (not shown) provided in the case 1 via the connection pipe 3.

A driving unit 4 is provided in the case 1 and the driving unit 4 may include a motor 43 driven by a controller 8 which will be described later and a pair of wheels 41 connected with the motor 43.

In the meanwhile, the conventional cleaner is a drag type the user can vacuum, with dragging the cleaner case. That is, the user vacuums dust or foreign matters into the case, with moving the suction nozzle to spots where the cleaning objects are located. As the suction nozzle is moved, the cleaner case is moved toward the user by the connection pipe. Because of that, such the conventional cleaner might cause a problem of declined convenience to the user that is sensitive to the weight of the cleaner case.

However, the cleaner according to the present invention includes the case that is able to self-trace the user's position or the position of the suction nozzle, to solve the problem of the conventional cleaner.

To solve the disadvantage of the conventional cleaner mentioned above, the cleaner 100 according to this embodiment may further include an image processing device 5 provided in the case 1 to photograph a forward side image of the case and to recognize information on the case and a relative position of a set target from the photographed forward side image, a driving unit 4 configured to move the case, and a controller 8 configured to control the driving unit for a distance between the case and the target to belong to a preset reference distance range based on the position information provided by the image processing device.

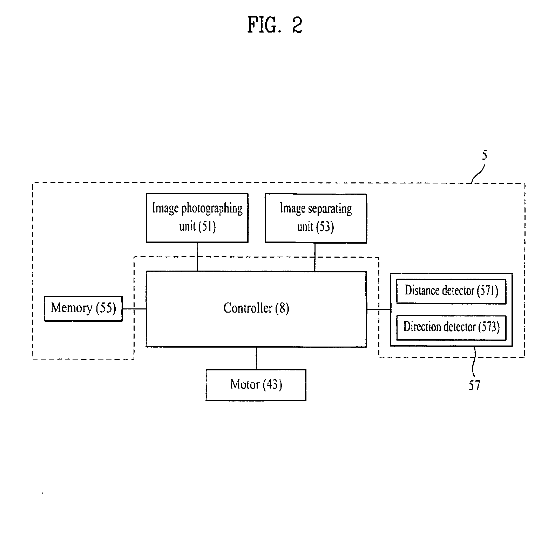

In this case, the controller (8, see FIG. 2) moves the case to a preset reference distance (that is, in a reference distance range) based on the information on the positions of the case and the target which is provided by the image processing device 5.

FIG. 2 is a conceptual diagram of the controller according to this embodiment. As follows, the image processing device 5 and the controller 8 will be described in detail.

The image processing device 5 photographs the target (the user or the suction nozzle) which is a tracing object located adjacent to the case, to provide information used to determine a distance between the case and the target and a direction toward the place where the target is located from the case. The image processing device 5 may include an image photographing unit (51, see FIG. 1) provided in a forward surface of the case, an image separating unit 53 separating an image of a tracing object (hereinafter, a target image) from an image provided from the image photographing unit, and a memory 55 where data of a distance and an angle with respect to a point located in the forward side image can be stored.

The image photographing unit 51 is provided in the forward surface of the case 1 as means used for photographing an image (that is, a forward side image) including the target of the tracing object (that is, the user or the suction nozzle). Here, the image photographing unit 51 may be provided in the forward surface of the case, with a photographing angle that can be changeable up/down and right/left. The reason why the photographing angle of the image photographing unit can be changeable that the position of the image photographing unit has to be changed by the controller or the user to change a photograph range of the forward side image.

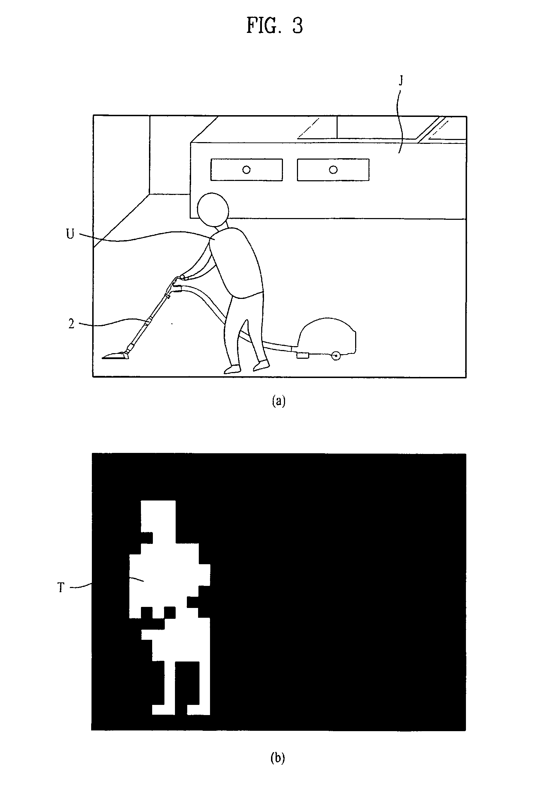

In the meanwhile, the image separating unit 53 is provided to separate the target image, which is the image of the tracing object of the user or the suction nozzle, from the photographed forward side image. The image separating unit 53 may be any type of a device or an algorithm which only can separate a specific image possessed by an image. As follows, an example of the image separating unit will be described in reference to FIG. 3.

FIG. 3 is a conceptual diagram of a forward side image acquired by the image photographing unit 51 and a target image separated by the image separating unit 53.

The image photographing unit 51 according to this embodiment may photograph a forward side image at least two times at a preset interval. FIG. 3(a) illustrates an example of the forward side image including the user (U) or the suction nozzle 2 that is the tracing object. In this case, the image separating unit 53 compares two of forward side images photographed at least two times with each other, to set and separate a target image.

The target image is an image of the tracing object the case will detect. The image separating unit 53 compares the two forward side images photographed by the image photographing unit with each other, and it sets an object having bigger change of the position as target image.

In other words, the user vacuums with moving the suction nozzle toward the cleaning object. Because of that, the location of the user (U) or the suction nozzle 2 is changed more than that of the background (J) in the forward side image. The image separating unit 53 compares at least two of the forward side images with each other and the object having the biggest position change (that is, the user or the suction nozzle) is set as target image.

Once the target image is set, the image separating unit 53 separates the target image from the last one of the two forward side images photographed at a preset interval. FIG. 3(b) shows the separated image of the user set as the target image (T).

When the target image is separated from the forward side image, the controller 8 detects a distance between the case 1 and the target based on the distance data stored in the memory 55 and an angle of a direction toward the target from the case.

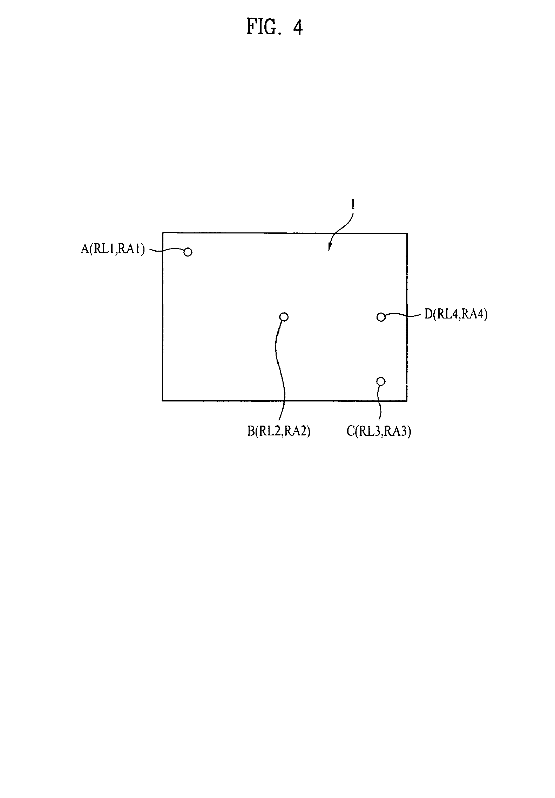

In the memory 55 may be stored experimental data of the distance between the case and the target located at a point inside the forward side image photographed by the image photographing unit (hereinafter, distance data) and data of an angle of a direction toward the target from the case (hereinafter, angle data). FIG. 4 illustrates an example of the distance data and the angle data stored in the memory.

According to the distance data and the angle data stored in the memory shown in FIG. 4, the data provides information that the target is spaced apart a distance of RL1 from the case at an angle of RA1, when an target image is located at a point of "A" inside an forward side image (I), and that the target is spaced apart a distance of RL2 at an angle of RA2, when the target image is located at a point "B".

As a result, the controller 8 compares the location of the target image provided by the image separating unit 53 with the data provided by the memory, such that it may determined exactly how distant is the user or the suction nozzle which is the tracing object from the case 1 (the distance) and which direction the target is located with respect to the case.

The image processing device 5 may further include a detector 57 comprising a distance detector 571 and a direction detector 573. In this case, the controller 8 may be configured to receive information on a distance and an angle provided by the distance detector 571 and the direction detector 573. Here, the distance detector 571 determines the distance by comparing the target image with distance data stored in a memory. The direction detector 573 may detect an angle of a direction toward the target from the case by comparing the target image with the angle data of the memory.

In the meanwhile, the target image may be a type occupying a predetermined region of a forward side image by collecting a plurality of points to be separated, different from a type of a single point shown in FIG. 3(b).

In this case, the controller may determine the data of the distance corresponding to the lowest end of the target image and the data of the angle based on the distance between the case and the target and the angle of the direction toward the target from the case.

The reason why the lowest end position of the target image is used as reference of detection to determine the distance and the angle between the case and the target is that the user's feet will be the reference in case the user is the target and that a boundary with the floor will be the reference of detection in case the target is the suction nozzle.

Through the process mentioned above, the distance and angle of the user or the suction nozzle from the case are determined. After that, the controller 8 compares the distance with a preset reference distance and it controls the case 1 to move within the reference distance.

In other words, when the distance is larger or smaller than the reference distance, the controller 8 controls wheels (41, see FIG. 1) by using the motor 43 of the driving unit 4 to move the case 1 within the reference distance.

In the meanwhile, a range having the upper limit and the lower limit (a reference distance range) may be set as the reference distance. In this case, the controller 8 controls the case 1 to move to a position at which the distance belongs to the reference distance range.

Also, the reference distance range may be preset and stored by a manufacturer or a setting part (not shown) may be further provided in the cleaner to allow the user to input a desired reference distance or reference distance range to the setting part as occasion calls.

When locating the case within the reference distance (or the reference distance range) by moving the case, it is preferable that the controller 8 rotates the case for the angle of the direction toward the target from the case within a preset reference angle (or a reference angle range).

For that, the motor 43 may be provided in each of the pair of the wheels 41 provided in both ends of the case. The posture of the case may be changed before, while and after moving the case.

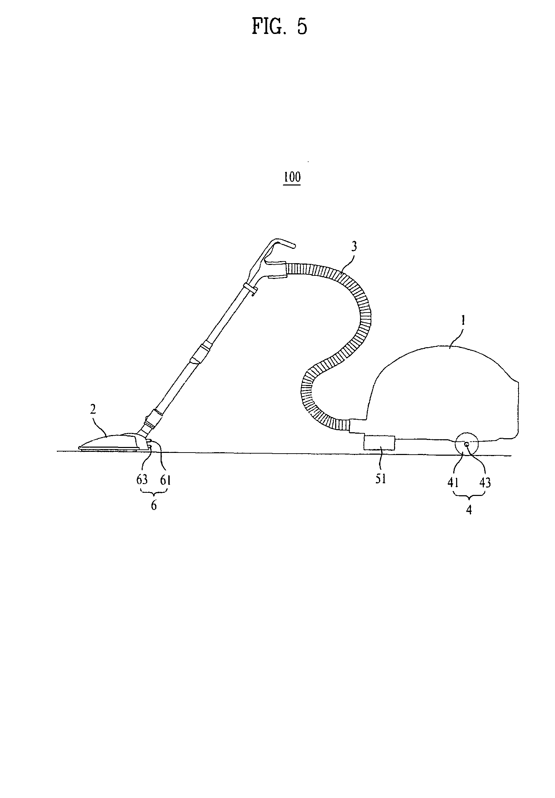

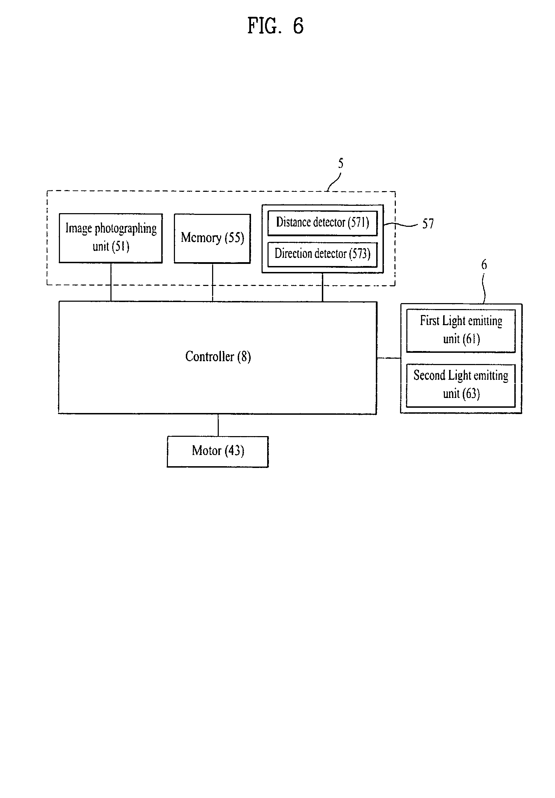

FIGS. 5 and 6 are conceptual diagrams illustrating a cleaner according to another embodiment of the present invention and a controller provided in the cleaner according to the embodiment. As follows, the cleaner according to this embodiment will be described.

Different from the embodiment mentioned above, the cleaner according to this embodiment further includes a light emitting unit 6. As follows, the light emitting unit which is the different configuration from the above embodiment shown in FIG. 1 will be explained.

The light emitting unit 6 is provided to emit a light toward the image photographing unit 51. As shown in FIG. 5, the light emitting unit 6 may be provided in a rear surface of the suction nozzle and it may include first and second light emitting unit 61 and 63 which are spaced apart a predetermined distance from each other.

In this case, the image processing device 5 determines the distance between the suction nozzle 2 and the case 1 based on a distance formed in the forward side image by the lights emitted from the light emitting unit 6. The image processing device 5 recognizes a direction toward the suction nozzle from the case based on the position in the forward side image photographed by the lights.

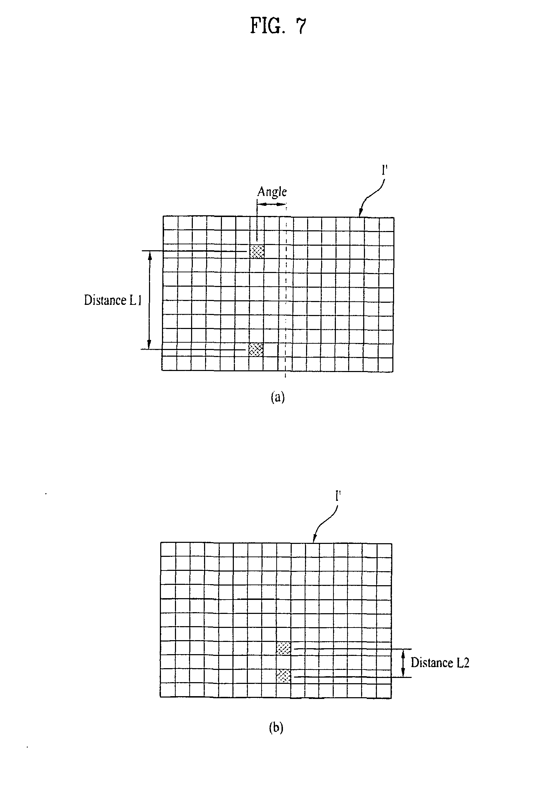

FIG. 7 is a conceptual diagram of the forward side image. As follows, an example of the forward side image provided by the image photographing unit of the cleaner having the light emitting unit will be described.

Lights emitted from the first light emitting unit 61 and the second light emitting unit 63 are photographed in the forward side image photographed by the image photographing unit 51. When the suction nozzle 2 is located close to the case, a distance between the photographed lights will be relatively far (L1) as shown in FIG. 7(a). When the suction nozzle 2 is located distant from the case, the distance between the photographed lights will be relatively close (L2).

Of course, the forward side image shown in FIG. 7 may include an image of the background as well as the image of the lights emitted from the light emitting unit.

As a result, the image processing device 5 further includes an image separating unit 53 to separate the lights emitted from the light emitting unit 6 from the background, different from the embodiment shown in FIG. 6. In this case, the image separating unit 53 may set the brightest one of objects inside the forward side image as target image.

Here, the light emitting unit 6 may be provided emit only a light with a specific wavelength such as an infrared ray and the image photographing unit 51 includes a filter (not shown) to pass only the light emitted from the light emitting unit there through. If then, the image processing device 5 can photograph only the light emitting unit 6 in the forward side image, without using the image separating unit 53.

When gaining the forward side image having the photographed lights which are emitted from the light emitting unit 6 from the image photographing unit 51, the controller 8 compares the distance data stored in the memory 55 with the distance between the lights photographed in the forward side image, to determine the distance between the target and the case. The controller 8 compares the angle data stored in the memory 55 with the positions of the lights photographed in the forward side image, to determine the angle of the direction toward the target from the case.

The distance data is data of the distance between the target (that is, the suction nozzle) and the case 1 corresponding to the distance formed by two of points located in the forward side image. The angle data is data of the angle of the direction toward the target from the case 1 corresponding to one of points located in the forward side image.

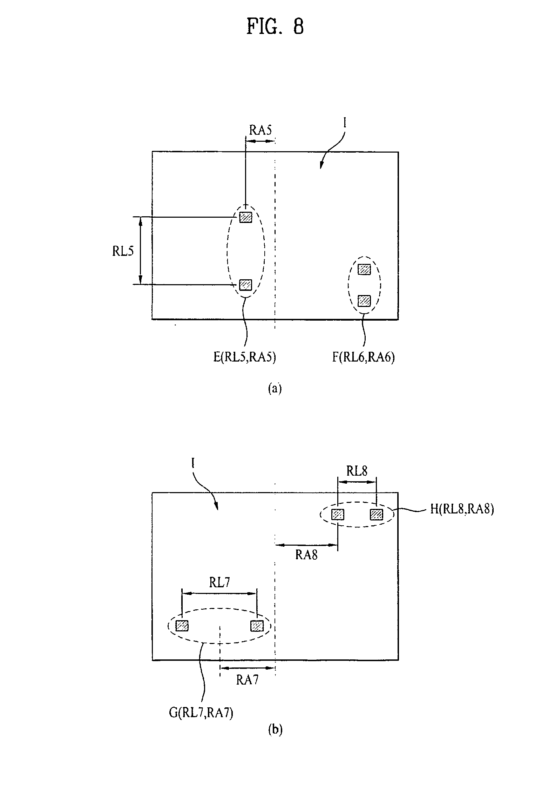

FIG. 8 (a) is an example of the data stored in the memory in case the light emitting unit 6 is spaced apart a predetermined distance from the suction nozzle 2 in a vertical direction. FIG. 8(b) is an example of the data stored in the memory in case the light emitting unit 6 is spaced apart a predetermined distance from the suction nozzle in a horizontal direction.

As follows, the process of determining the distance and the direction (that is, the angle) between the case and the target will be described in detail in reference to FIG. 8(a). Here, it is assumed that the lights emitted from the light emitting unit are photographed at a point of "E" located in the forward side image (I') in this case, the controller determines distance data (R15) stored in the memory as the distance between the case and the target and angle data (RA5) stored in the memory as the direction (the angle) toward the target from the case.

FIG. 8(a) illustrates that a center of the forward side image is set as a reference point of the angle data. Alternatively, a predetermined end of the forward side image can be set as the reference point of the angle data.

Here, when the light emitting unit is provided in the horizontal direction with respect to the suction nozzle as shown in FIG. 8(b), the controller may determine a reference angle (RA8 of H) corresponding to one of the two photographed lights as the distance angle or it may determined a reference angle (RA7 of G) corresponding to a center point between the lights emitted from the light emitting unit as the distance angle.

The image processing device 5 may further include a detector 57 comprising a distance detector 571 and a direction detector 573. Here, the controller 8 may be configured to receive information on the distance and the angle provided by the distance detector 571 and the direction detector 573. In this case, the distance detector 571 determines the distance by using data of the distance between the light emitting units photographed in the forward side image and the distance data stored in the memory. The direction detector 573 may detect the angle of the direction toward the target from the case by comparing the position of the light emitting unit photographed in the forward side image with the angle data stored in the memory.

When the distance and the direction of the suction nozzle, which is the tracing object, from the case are determined through the process mentioned above, the controller 8 compares a preset reference distance with the distance to move the case to locate it within the reference distance.

In other words, when the distance is larger and smaller than the reference distance, the controller 8 controls wheels (41, see FIG. 1) by using the motor 43 of the driving unit 4, to move the case to locate it within the reference distance. In this case, a range having the upper limit and the lower limit (a reference distance range) may be set as the reference distance.

In the meanwhile, when locating the case within the reference distance (or the reference distance range) by moving the case, it is preferable that the controller 8 rotates the case to locate the angle of the direction toward the target from the case within a preset reference angle (or a reference angle range).

This is because the distance moved by the case is a distance from a current position of the case to a circumference of a circle having a radius which equals to a reference distance (or a reference distance range) from the tracing object. Because of that, if the case moving to a position located within the reference distance is toward the tracing object which is the center of the circumference, the movement passage of the case may be reduced as much as possible.

In this case, the motor 43 may be provided in each of the pair of the wheels 41 provided in both ends of the case. The posture of the case may be changed before, while and after moving the case.

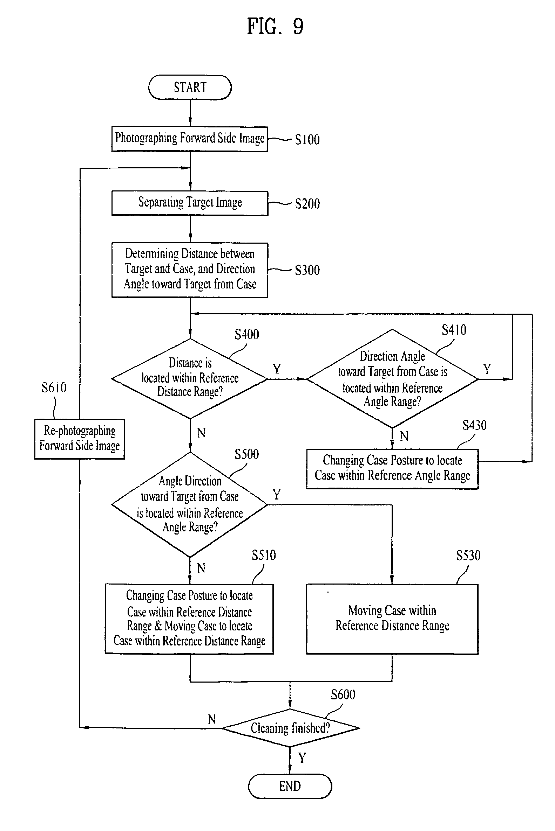

FIG. 9 is a flow chart illustrating a control process of the cleaner and the control process of the cleaner according to the present invention will be described as follows.

Once a driving command of the cleaner is input, the image photographing unit 51 photographs a forward side image having the user or the suction nozzle which is the target (S100). The image separating unit 53 sets a target image from at least two forward side images photographed at a preset interval and it separates the target image from the final one of the photographed forward side images (S200).

After that, the controller 8 determines a distance and an angle (or a direction) of the target from the case by comparing the target image with distance data and angle data stored in the memory 55 (S300).

When determining a relative position between the case and the user or the suction nozzle which is the tracing object, the controller 8 determines whether the distance between the case and the tracing object belongs to a preset reference distance range (or a reference distance) (S400).

When the distance belongs to the reference distance range, it is determined whether an angle of a direction toward the target from the case belongs to a reference angle range (S410).

If the angle of the direction toward the target from the case is located within the reference angle range, the controller 8 may not change the position of the case. If the angle of the direction toward the target from the case is out of the reference angle range, the controller 8 rotates the case 1 to locate the angle within the reference angle range (posture change, S430).

When it is determined that the distance is not located within the reference distance range, the controller 8 controls the driving unit 4 to move the case to a position located within the reference distance range.

Here, it is preferable that a step (S500) of determining a moving direction to minimize the movement passage of the case is performed before the case is moved.

In other words, when the angle of the direction toward the target from the case is located within the reference angle range, the controller 8 moves the case to the reference distance range (S530). When the angle of the direction toward the target from the case is out of the reference angle range, the controller moves the case to the reference distance after rotating the case toward the target (S510).

Here, the posture change of the case may be performed in the process of moving the case to the reference distance.

Once the moving of the case is completed, the controller 8 determines whether a cleaning finish signal is generated (S600). When the cleaning finish signal is not generated based on the result of the determination, the step mentioned above is repeated after the controller 8 the image photographing unit 51 to re-photograph a forward side image (S610).

It will be apparent to those skilled in the art that various modifications and variations can be made in the present invention without departing from the spirit or scope of the inventions. Thus, it is intended that the present invention covers the modifications and variations of this invention provided they come within the scope of the appended claims.

## Claims

1. A cleaner (100) comprising:
a case (1) comprising a suction motor provided therein;
a suction nozzle (2) provided distant from the case;
an image processing device (5) provided in the case to photograph a forward side image of the case; and
a driving unit (4) configured to move the case; **characterized in that** the image processing device recognizes relative position information between the case and a target set to be traced by the case; wherein the cleaner further comprises a controller (8) configured to control the driving unit to locate a distance between the case and the target, which is included in the position information provided by the image processing device, within a preset reference distance range.

2. The cleaner of claim 1, wherein the image processing device comprises an image photographing unit configured to photograph the forward side image; an image separating unit configured to separate an image of the target from the photographed forward side image; and a memory configured to store distance data corresponding to a position of the target image in the forward side image, and
the controller determines the distance between the target and the case based on the distance data and the position of the target image.

3. The cleaner of claim 2, wherein the target is a user who operates the suction nozzle.

4. The cleaner of claim 1, wherein the driving unit comprises a pair of wheels provided in a lower portion of the case; and a motor connected with the pair of the wheels to rotate the wheels.

5. The cleaner of claim 4, wherein the pair of the wheels are provided in both ends of the case, respectively, and
the pair of the motors are provided to rotate the pair of the wheels, respectively.

6. The cleaner of claim 2, wherein the image photographing unit photographs at least two forward side images at a preset interval, and
the image separating unit sets one of the two images with bigger position change as the target image by comparing the at least two forward side images with each other and the image separating unit separates the target image from the latest one of the at least two photographed forward side images.

7. The cleaner of claim 2, wherein the controller sets distance data corresponding to a lowest end of the target image as the distance between the case and the target.

8. The cleaner of claim 2, wherein the position information recognized from the forward side image by the image processing device comprises an angle of a direction toward the target from the case, and
the controller controls the driving unit to rotate the case, to locate the angle of the direction toward the target from the case within a preset reference angle range.

9. The cleaner of claim 8, wherein the memory stores angle data corresponding to a position of the target image located in the forward side image therein, and
the controller recognizes the angle data corresponding to the position of the target image as the angle of the direction toward the target from the case.

10. The cleaner of claim 1, wherein the target is the suction nozzle.

11. The cleaner of claim 10, further comprising:
at least two light emitting units provided in the suction nozzle, with spaced apart a predetermined distance from each other,
wherein the image processing device recognizes relative position information between the case and the target by photographing lights emitted from the light emitting units.

12. The cleaner of claim 11, wherein the image processing device comprises an image photographing unit configured to photograph a forward side image having the lights emitted from the light emitting units therein; and a memory configured to store distance data corresponding to a distance between the lights of the light emitting units, which are photographed in the forward side image, therein, and
the controller determines the distance by comparing the distance between the lights photographed in the forward side image with the distance data.

13. The cleaner of claim 12, wherein the position information recognized from the forward side image by the image processing device comprises an angle of a direction toward the target from the case, and
the controller rotates the case by controlling the driving unit to locate the angle of the direction toward the target from the case within a preset reference angle range.

14. The cleaner of claim 13, wherein the memory stores angle data corresponding to a position of each point located in the forward side image therein, and
the controller recognizes angle data corresponding to one of the lights emitted from the light emitting unit which are photographed in the forward side image as the angle of the direction toward the target from the case.

15. The cleaner of claim 14, wherein the memory stores angle data corresponding to a position of each point located in the forward side image therein, and
the controller recognizes the angle data corresponding to a center point between the lights of the light emitting units which are photographed in the forward side image as the angle of the direction toward the target from the case.

## Patentansprüche

1. Reiniger (100), der aufweist:
ein Gehäuse (1) mit einem darin vorgesehenen Saugmotor;
eine Saugdüse (2), die entfernt vom Gehäuse vorgesehen ist;
eine Bildverarbeitungsvorrichtung (5), die im Gehäuse vorgesehen ist, um ein Vorderseitenbild des Gehäuses aufzunehmen; und
eine Antriebseinheit (4), die so konfiguriert ist, dass sie das Gehäuse bewegt;
**dadurch gekennzeichnet, dass** die Bildverarbeitungsvorrichtung Relativpositionsin-formationen zwischen dem Gehäuse und einem Ziel erkennt, das so eingestellt ist,
dass es vom Gehäuse verfolgt wird; wobei der Reiniger ferner eine Steuerung (8) aufweist, die so konfiguriert ist, dass sie die Antriebseinheit steuert, um einen Abstand zwischen dem Gehäuse und dem Ziel, der zu den von der Bildverarbeitungsvorrichtung bereitgestellten Positionsinformationen gehört, in einem voreingestellten Referenzabstandsbereich anzuordnen.

2. Reiniger nach Anspruch 1, wobei die Bildverarbeitungsvorrichtung aufweist: eine Bildaufnahmeeinheit, die so konfiguriert ist, dass sie das Vorderseitenbild aufnimmt; eine Bildtrenneinheit, die so konfiguriert ist, dass sie ein Bild des Ziels aus dem aufgenommenen Vorderseitenbild trennt; und einen Speicher, der so konfiguriert ist, dass er Abstandsdaten in Entsprechung zu einer Position des Zielbilds im Vorderseitenbild speichert, und
die Steuerung den Abstand zwischen dem Ziel und dem Gehäuse auf der Grundlage der Abstandsdaten und der Position des Zielbilds bestimmt.

3. Reiniger nach Anspruch 2, wobei das Ziel ein Benutzer ist, der die Saugdüse bedient.

4. Reiniger nach Anspruch 1, wobei die Antriebseinheit aufweist: ein Paar Räder, die in einem unteren Abschnitt des Gehäuses vorgesehen sind; und einen Motor, der mit dem Paar Rädern verbunden ist, um die Räder zu drehen.

5. Reiniger nach Anspruch 4, wobei das Paar Räder jeweils in beiden Enden des Gehäuses vorgesehen ist und
das Paar Motoren vorgesehen ist, um das Paar Räder jeweils zu drehen.

6. Reiniger nach Anspruch 2, wobei die Bildaufnahmeeinheit mindestens zwei Vorderseitenbilder in einem voreingestellten Intervall aufnimmt und
die Bildtrenneinheit eines der beiden Bilder mit größerer Positionsänderung als das Zielbild einstellt, indem sie die mindestens zwei Vorderseitenbilder miteinander vergleicht, und die Bildtrenneinheit das Zielbild aus dem jüngsten der mindestens zwei aufgenommenen Vorderseitenbilder trennt.

7. Reiniger nach Anspruch 2, wobei die Steuerung Abstandsdaten in Entsprechung zu einem untersten Ende des Zielbilds als den Abstand zwischen dem Gehäuse und dem Ziel einstellt.

8. Reiniger nach Anspruch 2, wobei die Positionsinformationen, die durch die Bildverarbeitungsvorrichtung aus dem Vorderseitenbild erkannt werden, einen Winkel einer Richtung vom Gehäuse zum Ziel aufweisen und
die Steuerung die Antriebseinheit steuert, um das Gehäuse zu drehen, um den Winkel der Richtung vom Gehäuse zum Ziel in einem voreingestellten Referenzwinkelbereich anzuordnen.

9. Reiniger nach Anspruch 8, wobei der Speicher Winkeldaten in Entsprechung zu einer Position des im Vorderseitenbild liegenden Zielbilds darin speichert, und
die Steuerung die Winkeldaten in Entsprechung zur Position des Zielbilds als den Winkel der Richtung vom Gehäuse zum Ziel erkennt.

10. Reiniger nach Anspruch 1, wobei das Ziel die Saugdüse ist.

11. Reiniger nach Anspruch 10, der ferner aufweist:
mindestens zwei in der Saugdüse vorgesehene lichtemittierende Einheiten, die einen vorbestimmten Abstand voneinander haben,
wobei die Bildverarbeitungsvorrichtung Relativpositionsinformationen zwischen dem Gehäuse und dem Ziel durch Aufnehmen von Lichtstrahlen erkennt, die von den lichtemittierenden Einheiten emittiert werden.

12. Reiniger nach Anspruch 11, wobei die Bildverarbeitungsvorrichtung aufweist: eine Bildaufnahmeeinheit, die so konfiguriert ist, dass sie ein Vorderseitenbild mit den von den lichtemittierenden Einheiten emittierten Lichtstrahlen darin aufnimmt; und einen Speicher, der so konfiguriert ist, dass er Abstandsdaten in Entsprechung zu einem Abstand zwischen den Lichtstrahlen der lichtemittierenden Einheiten darin speichert, die im Vorderseitenbild aufgenommen sind, und
die Steuerung den Abstand bestimmt, indem sie den Abstand zwischen den im Vorderseitenbild aufgenommenen Lichtstrahlen mit den Abstandsdaten vergleicht.

13. Reiniger nach Anspruch 12, wobei die Positionsinformationen, die durch die Bildverarbeitungsvorrichtung aus dem Vorderseitenbild erkannt werden, einen Winkel einer Richtung vom Gehäuse zum Ziel aufweisen und
die Steuerung das Gehäuse durch Steuern der Antriebseinheit dreht, um den Winkel der Richtung vom Gehäuse zum Ziel in einem voreingestellten Referenzwinkelbereich anzuordnen.

14. Reiniger nach Anspruch 13, wobei der Speicher Winkeldaten in Entsprechung zu einer Position jedes im Vorderseitenbild liegenden Punkts darin speichert und
die Steuerung Winkeldaten in Entsprechung zu einem der von der lichtemittierenden Einheit emittierten Lichtstrahlen, die im Vorderseitenbild aufgenommen sind, als den Winkel der Richtung vom Gehäuse zum Ziel erkennt.

15. Reiniger nach Anspruch 14, wobei der Speicher Winkeldaten in Entsprechung zu einer Position jedes im Vorderseitenbild liegenden Punkts darin speichert und
die Steuerung die Winkeldaten in Entsprechung zu einem Mittelpunkt zwischen den Lichtstrahlen der lichtemittierenden Einheiten, die im Vorderseitenbild aufgenommen sind, als den Winkel der Richtung vom Gehäuse zum Ziel erkennt.

## Revendications

1. Appareil de nettoyage (100) qui comprend :
une enceinte (1) qui comprend un moteur d'aspiration prévu à l'intérieur ;
une buse d'aspiration (2) prévue de manière distante par rapport à l'enceinte ;
un dispositif de traitement d'image (5) prévu dans l'enceinte afin de photographier une image de devant de l'enceinte ; et
une unité d'entraînement (4) configurée pour déplacer l'enceinte ;
**caractérisé en ce que** le dispositif de traitement d'image reconnaît des informations de position relative entre l'enceinte et une cible prévue pour être suivie par l'enceinte ;
dans lequel l'appareil de nettoyage comprend en outre
un contrôleur (8) configuré pour contrôler l'unité d'entraînement afin de localiser une distance entre l'enceinte et la cible, qui est incluse dans les informations de position fournies par le dispositif de traitement d'image, dans les limites d'une distance de préférence prédéfinie.

2. Appareil de nettoyage selon la revendication 1, dans lequel le dispositif de traitement d'image comprend une unité de photographie configurée pour photographier l'image de devant ; une unité de séparation d'image configurée pour séparer une image de la cible de l'image de devant photographiée ; et une mémoire configurée pour stocker des données de distance qui correspondent à une position de l'image de la cible sur l'image de devant, et
le contrôleur détermine la distance entre la cible et l'enceinte sur la base des données de distance et de la position de l'image de la cible.

3. Appareil de nettoyage selon la revendication 2, dans lequel la cible est un utilisateur qui se sert de la buse d'aspiration.

4. Appareil de nettoyage selon la revendication 1, dans lequel l'unité d'entraînement comprend une paire de roues prévues dans une partie inférieure de l'enceinte ; et un moteur relié à la paire de roues afin de faire tourner les roues.

5. Appareil de nettoyage selon la revendication 4, dans lequel la paire de roues est prévue aux deux extrémités de l'enceinte, respectivement, et
la paire de moteurs est prévue afin de faire tourner la paire de roues, respectivement.

6. Appareil de nettoyage selon la revendication 2, dans lequel l'unité de photographie photographie au moins deux images de devant à un intervalle prédéfini, et
l'unité de séparation d'image définit l'une des deux images qui présente un changement de position plus important comme étant l'image cible, en comparant les deux images de devant l'une avec l'autre, et l'unité de séparation d'image sépare l'image de cible de la dernière des deux images de devant photographiées.

7. Appareil de nettoyage selon la revendication 2, dans lequel le contrôleur définit des données de distance qui correspondent à une extrémité inférieure de l'image de cible comme étant la distance entre l'enceinte et la cible.

8. Appareil de nettoyage selon la revendication 2, dans lequel les informations de position reconnues à partir de l'image de devant par le dispositif de traitement d'image comprennent un angle d'une direction qui va vers de l'enceinte vers la cible, et
le contrôleur contrôle l'unité d'entraînement afin de faire tourner l'enceinte, de façon à placer l'angle de direction de l'enceinte vers la cible, dans des limites d'angle de référence prédéfinies.

9. Appareil de nettoyage selon la revendication 8, dans lequel la mémoire stocke des données d'angle qui correspondent à une position de l'image de cible qui se trouve sur l'image de devant, et
le contrôleur reconnaît les données d'angle qui correspondent à la position de l'image de cible comme étant l'angle de direction entre l'enceinte et la cible.

10. Appareil de nettoyage selon la revendication 1, dans lequel la cible est la buse d'aspiration.

11. Appareil de nettoyage selon la revendication 10, qui comprend en outre :
au moins deux unités électroluminescentes prévues dans la buse d'aspiration, et espacées l'une de l'autre selon une distance prédéterminée,
dans lequel le dispositif de traitement d'image reconnaît les informations de position relative entre l'enceinte et la cible en photographiant les lumières émises par les unités électroluminescentes.

12. Appareil de nettoyage selon la revendication 11, dans lequel le dispositif de traitement d'image comprend une unité de photographie configurée pour photographier une image de devant des lumières émises par les unités électroluminescentes ; et une mémoire configurée pour stocker des données de distance qui correspondent à une distance entre les lumières des unités électroluminescentes, qui sont photographiées au sein de l'image de devant, et
le contrôleur détermine la distance en comparant la distance entre les lumières photographiées au sein de l'image de devant avec les données de distance.

13. Appareil de nettoyage selon la revendication 12, dans lequel les informations de position reconnues à partir de l'image de devant par le dispositif de traitement d'image comprennent un angle de direction entre l'enceinte et la cible, et
le contrôleur fait tourner l'enceinte en contrôlant l'unité d'entraînement afin de placer l'angle de direction entre l'enceinte et la cible, dans des limites d'angle de référence prédéfinies.

14. Appareil de nettoyage selon la revendication 13, dans lequel la mémoire stocke des données d'angle qui correspondent à une position de chaque point situé sur l'image de devant, et
le contrôleur reconnaît des données d'angle qui correspondent à l'une des lumières émises par l'unité électroluminescente qui sont photographiées au sein de l'image de devant comme étant l'angle de direction entre l'enceinte et la cible.

15. Appareil de nettoyage selon la revendication 14, dans lequel la mémoire stocke des données d'angle qui correspondent à une position de chaque point qui se trouve au sein de l'image de devant, et
le contrôleur reconnaît les données d'angle qui correspondent à un point central entre les lumières des unités électroluminescentes qui sont photographiées au sein de l'image de devant comme étant l'angle de direction entre l'enceinte et la cible.
